# EUROPEAN PATENT APPLICATION

(11) **EP 2 033 729 A1**
(43) Date of publication of application: **11.03.2009**
(21) Application number: 07767541.1
(22) Date of filing: 26.06.2007
(51) Int. Cl.: B23B 49/00, B23B 41/02, B23Q 15/12, B23Q 17/12, G05B 19/416

(54) **DEEP HOLE DRILLING APPARATUS**

(30) Priority: 29.06.2006 JP 2006179017
(71) Applicant: Mitsubishi Heavy Industries, Ltd., Minato-ku Tokyo 108-8215 (JP)
(72) Inventor: KAWASHITA, Rimpei c/o Takasago Research & Development Centre,, Takasago-shi, Hyogo 676-8686 (JP); HIROTA, Kazuo c/o Takasago Research & Development Centre,, Takasago-shi, Hyogo 676-8686 (JP); KAGUCHI, Hitoshi c/o Kobe Shipyard & Machinery Works, Mitsubishi Heavy Industries Ltd.,, Kobe-shi, Hyogo 652-8585 (JP); KASUBATA, Yoshitake c/o Kobe Shipyard & Machinery Works, Mitsubishi Heavy Industries Ltd.,, Kobe-shi, Hyogo 652-8585 (JP); KAMBE, Akio c/o Machine Tool Division, Mitsubishi Heavy Industries, Ltd.,, Shiga 520-3080 (JP)
(74) Representative: Henkel, Feiler & Hänzel
(86) International application number: PCT/JP2007/062735
(87) International publication number: WO 2008/001735

(57) **Abstract**

A deep-hole drilling apparatus capable of preventing a tool mark from growing is provided. The deep-hole drilling apparatus provided for this purpose comprises: a tool (12) that is rotationally driven to drill a deep hole (Wa) in a work (W); an acceleration meter (19) that detects vibration of the tool (12) as the acceleration during deep hole processing; a monitoring apparatus (20) which performs frequency analysis on the acceleration detected by the acceleration meter (19) and which determines that a tool mark is produced in the deep hole (Wa) when the overall value of the whirling frequency and the bending natural frequency within a frequency range not including the torsional natural frequency on torsional vibration, constantly produced during the deep hole processing, exceeds a predetermined threshold (α) ; and an NC apparatus (18) that controls both revolution and feeding speed of the tool (12) on the basis of the determination made by the monitoring apparatus (20).

## Description

### TECHNICAL FIELD

The present invention relates to a deep-hole drilling apparatus that is capable of preventing the growth of a tool mark.

### BACKGROUND ART

A common and frequently-employed method of drilling a hole in a work (object to be processed) is as follows. A tool, such as a drill, is attached to a tool-holding member, such as a chuck, and, then, the tool is rotated to make a hole. A recent trend of making various products compact has required compact component parts for these products. Making a compact component part often requires the drilling of a small-diameter and deep hole in the component part. In addition, the drilling has to be precise.

Drilling a hole with a large ratio of hole depth to hole diameter is specifically referred to as deep-hole drilling. Conventionally known techniques of drilling a deep hole include gun drill systems as well as BTA (Boring and Trepanning Association) systems. A tool used for the deep-hole drilling is formed to have a small diameter and long size corresponding to the desired shape of the hole to be drilled in the work. The tip of the tool thus formed long, however, sometimes wobbles radially, and the wobbling makes it impossible to drill a precise deep hole.

Various deep-hole drilling apparatuses have been provided thus far to reduce the wobbling of the tool for deep-hole drilling and to drill a precise deep hole. Examples of such conventional-type deep-hole drilling apparatuses are disclosed in Patent Documents 1 to 3.

Patent Document 1: JP-A-H7-51992
Patent Document 2: JP-A-2003-159607
Patent Document 3: JP-B-3026555

### DISCLOSURE OF THE INVENTION

### PROBLEMS TO BE SOLVED BY THE INVENTION

A spiral scratch that is commonly known as a tool mark is sometimes formed during the deep-hole drilling. The whirling vibration of the tool tip leaves the tool mark in the inner circumferential surface of the deep hole.

Every tool has its bending natural frequency depending on its length. Under the condition that the bending natural frequency coincides with the frequency of the exciting force added as a frequency being x times higher than the revolution, a whirling vibration is more likely to occur. Once a whirling vibration occurs and a tool mark is produced, a phenomenon of diverging further the whirling vibration (self-excited vibration) is caused by the influence of the tool mark. Thus, the tool mark is grown.

A great variation in the protruding amount of tool occurs during a single operation of drilling a deep hole, and the variation in turn brings about a great variation in the frequency of the whirling vibration for the tool. Consequently, the bending natural frequency on bending vibration, and the frequency component x times higher than the revolution acting as the exciting force, which are factors for the whirling vibration, inevitably coincides with each other at least once in a single drilling operation. For this reason, it seems extremely difficult to prevent the occurrence of the tool mark.

Accordingly, one of the appropriate measures that have to be taken to address the tool mark is to detect the tool mark immediately after its occurrence and to change the drilling conditions to the ones that can evade the occurrence of the tool mark. Nevertheless, no conventional-type deep-hole drilling apparatuses take any countermeasures against the occurrence of the tool mark.

Accordingly, the present invention has been made to address the above-mentioned problem, and an object of the present invention is to provide a deep-hole drilling apparatus that is capable of preventing the growth of a tool mark.

### MEANS FOR SOLVING THE PROBLEMS

A deep-hole drilling apparatus according to a first invention provided to solve the above-mentioned problem is
characterized by comprising:
a tool that is rotationally driven to drill a deep hole in an object to be processed;
vibration detection means that detects vibration of the tool during deep hole processing;
tool-mark determination means which performs frequency analysis on the vibration detected by the vibration detection means, the tool-mark determination means determining that a tool mark is produced in the deep hole when an overall value of frequencies exceeds a predetermined threshold, the overall value of the frequencies being within a frequency range not including a torsional natural frequency on torsional vibration constantly produced during the deep hole processing; and
controlling means that controls both revolution and feeding speed of the tool on the basis of the determination made by the tool-mark determination means.

A deep-hole drilling apparatus according to a second invention provided to solve the above-mentioned problem is
the deep-hole drilling apparatus of the first invention which apparatus is
characterized in that
the tool-mark determination means determines that a tool mark is produced in the deep hole only in a case where the overall value continuously exceeds the threshold for a predetermined period of time.

A deep-hole drilling apparatus according to a third invention provided to solve the above-mentioned problem is the deep-hole drilling apparatus of any one of the first and the second inventions which apparatus is
characterized in that
the tool-mark determination means starts to make the determination when the revolution of the tool reaches a rated revolution.

A deep-hole drilling apparatus according to a fourth invention provided to solve the above-mentioned problem is the deep-hole drilling apparatus of any one of the first and the second inventions which apparatus is
characterized in that
the tool-mark determination means starts to make the determination when a current flowing through a motor that rotationally drives the tool reaches a rated current.

A deep-hole drilling apparatus according to a fifth invention provided to solve the above-mentioned problem is the deep-hole drilling apparatus of any one of the first and the second inventions which apparatus is
characterized in that
the tool-mark determination means starts to make the determination when a thrust load produced by the contact between the tool and the object to be processed reaches a rated thrust load.

A deep-hole drilling apparatus according to a sixth invention provided to solve the above-mentioned problem is the deep-hole drilling apparatus of anyone of the first to the fifth inventions which apparatus is
characterized in that
when the tool-mark determination means determines that a tool mark is produced in the deep hole, a frequency range for which the overall value is calculated at this time is stored.

A deep-hole drilling apparatus according to a seventh invention provided to solve the above-mentioned problem is the deep-hole drilling apparatus of the first invention which apparatus is
characterized in that
in a case where the drilling of the deep hole is completed with no overall values exceeding the threshold, a new threshold is calculated by multiplying the overall values by a desired safety factor, and the new threshold is used for the next determination that is carried out under the same drilling conditions.

### EFFECTS OF THE INVENTION

The deep-hole drilling apparatus according to the first invention comprises: a tool which is driven to rotate and which is used to drill a deep hole in an object to be processed; vibration detection means that detects vibration of the tool during the deep hole processing; tool-mark determination means which performs frequency analysis on the vibration detected by the vibration detection means, the tool-mark determination means determining that a tool mark is produced in the deep hole when the overall value of the frequencies within a frequency range not including the torsional natural frequency on torsional vibration, which is produced all the during the deep hole processing, exceeds a predetermined threshold; and controlling means that controls both revolution of the tool and feeding speed of the tool on the basis of the determination made by the tool-mark determination means. Accordingly, the growth of the tool mark is prevented by performing frequency analysis on the detected vibration, then determining whether a tool mark is produced or not, and, immediately after that, changing the conditions to the ones that are unlikely to produce the tool mark.

The deep-hole drilling apparatus according to the second invention is the deep-hole drilling apparatus of the first invention in which apparatus the tool-mark determination means determines that a tool mark is produced in the deep hole only in a case where the overall value continues to exceed for a predetermined length of time. Accordingly, determination errors can be avoided even when there is an instantaneous acceleration increase caused by disturbances or the like.

The deep-hole drilling apparatus according to the third invention is the deep-hole drilling apparatus of any one of the first and the second inventions in which apparatus the tool-mark determination means starts the determination when the revolution of the tool reaches a rated revolution. Accordingly, determination errors can be avoided even when the collision between the object to be processed and the tool caused by the positioning at the start of the drilling process causes an increase in the vibration all over the frequencies and the increased vibration exceeds the threshold.

The deep-hole drilling apparatus according to the fourth invention is the deep-hole drilling apparatus of any one of the first and the second inventions in which apparatus the tool-mark determination means starts the determination when the current flowing through a motor that drives to rotate the tool reaches a rated current. Accordingly, determination errors can be avoided even when the collision between the object to be processed and the tool caused by the positioning at the start of the drilling process causes an increase in the vibration all over the frequencies and the increased vibration exceeds the threshold.

The deep-hole drilling apparatus according to the fifth invention is the deep-hole drilling apparatus of any one of the first and the second inventions in which the tool-mark determination means starts the determination when the thrust load produced by the contact between the tool and the object to be processed reaches a rated thrust load. Accordingly, determination errors can be avoided even when the collision between the object to be processed and the tool caused by the positioning at the start of the drilling process causes an increase in the vibration all over the frequencies and the increased vibration exceeds the threshold.

The deep-hole drilling apparatus according to the sixth invention is the deep-hole drilling apparatus of any one of the first to the fifth inventions in which apparatus, when the tool-mark determination means determines that a tool mark is produced in the deep hole, a frequency range for which the overall value is calculated is stored. Accordingly, the stored frequency range is automatically set when the frequency analysis data is identical to the previous one. While a change in the frequency range for which the overall value is calculated may take place in response to the drilling conditions, such as the material for the work and the shape of the tools, the use of the above-described configuration makes it possible to respond immediately even to such a change.

According to the deep-hole drilling apparatus according to the seventh invention is the deep-hole drilling apparatus of the first invention in which apparatus, in a case where the drilling of the deep hole is completed with no overall values exceeding the threshold, new threshold is calculated by multiplying the overall values by a predetermined safety factor, and the new threshold is used for the next determination that is carried out under the same drilling conditions. Accordingly, since the threshold for each period of time can be obtained, more precise determination is possible. In addition, automatic response is possible even to the changes in the acceleration level caused by the changes in the drilling conditions, such as the material for the work and the shape of the tools.

### BRIEF DESCRIPTIONS OF THE DRAWINGS

[Fig. 1] Fig. 1 is a schematic diagram of a deep-hole drilling apparatus according to an embodiment of the present invention.
[Fig. 2] Fig. 2 is a chart showing results of the frequency analysis for acceleration.
[Fig. 3] Fig. 3 is a chart showing results of the frequency analysis for acceleration when a tool mark is produced.
[Fig. 4] Fig. 4 is a chart showing temporal variation in the overall value.
[Fig. 5] Fig. 5 is a chart showing another method of setting up the threshold.
[Fig. 6] Fig. 6 is a schematic diagram of a deep-hole drilling apparatus according to another embodiment of the present invention.

### DESCRIPTIONS OF SYMBOLS

1 and 2: 5-axis BTA machine; 11: Boring bar; 12: Tool; 13: Support member; 15: Pressure head; 16: Servo motor; 17: Ball screw mechanism; 18: NC apparatus; 19: Acceleration meter; 20: Monitoring apparatus; 21: Telemeter; 22: Cable; W: Work; Wa: Deep hole.

### BEST MODES FOR CARRYING OUT THE INVENTION

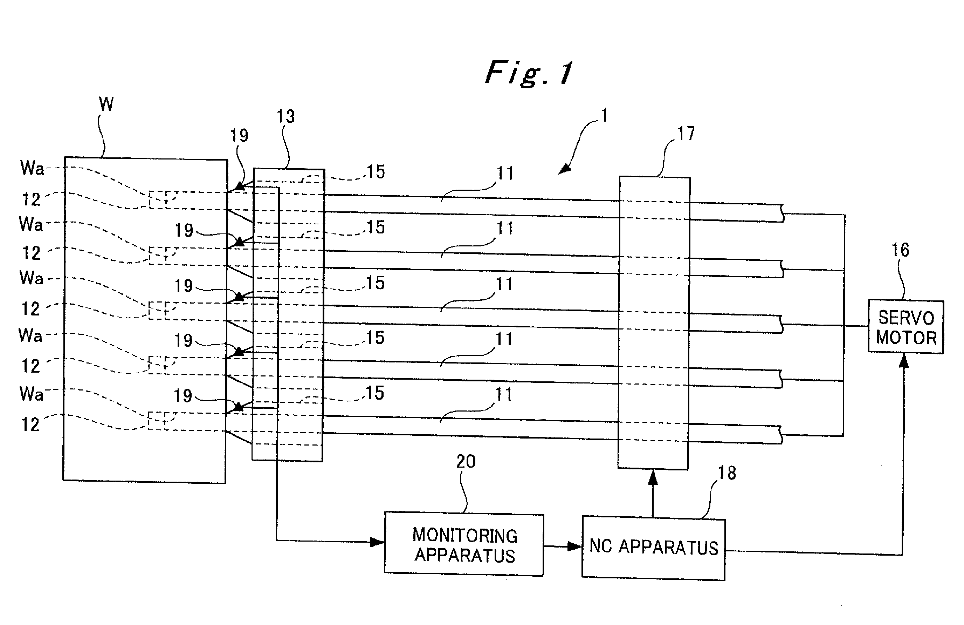

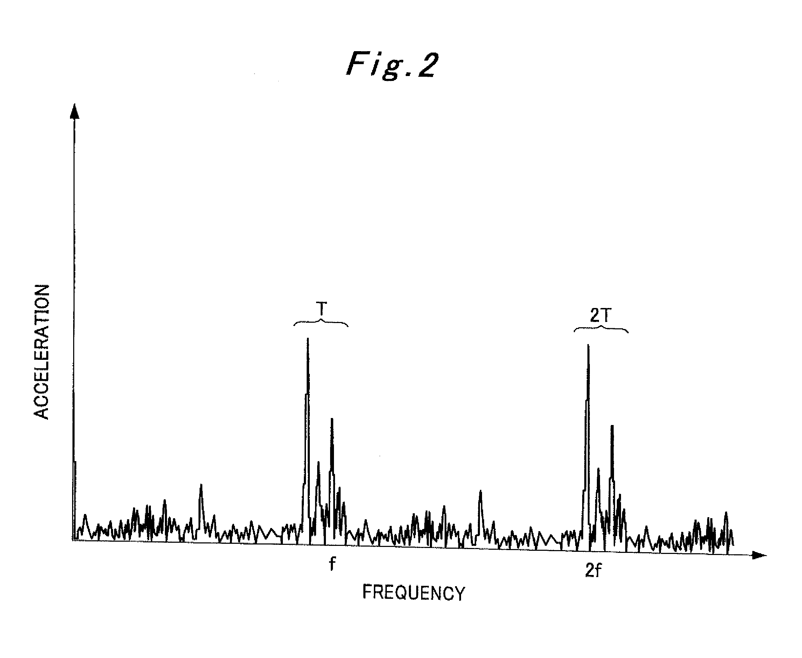

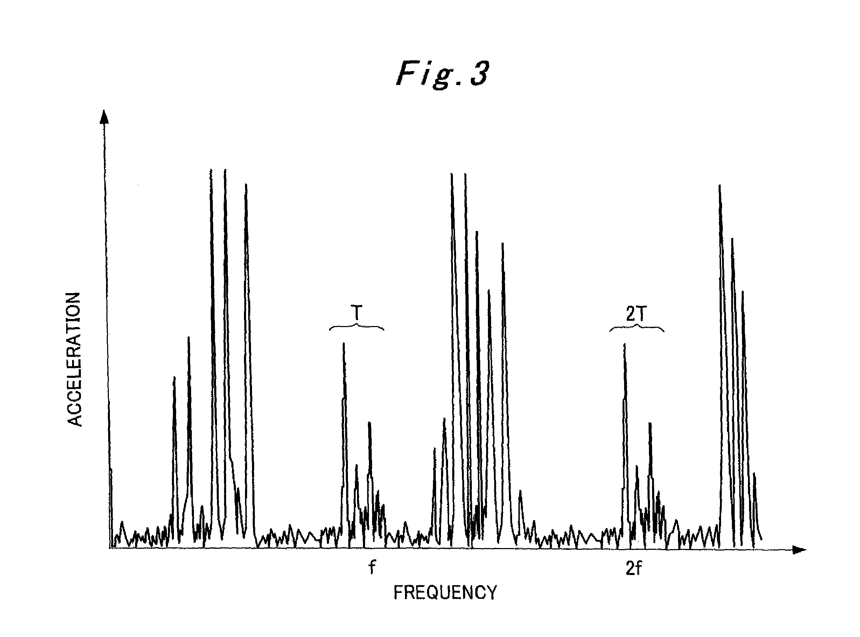

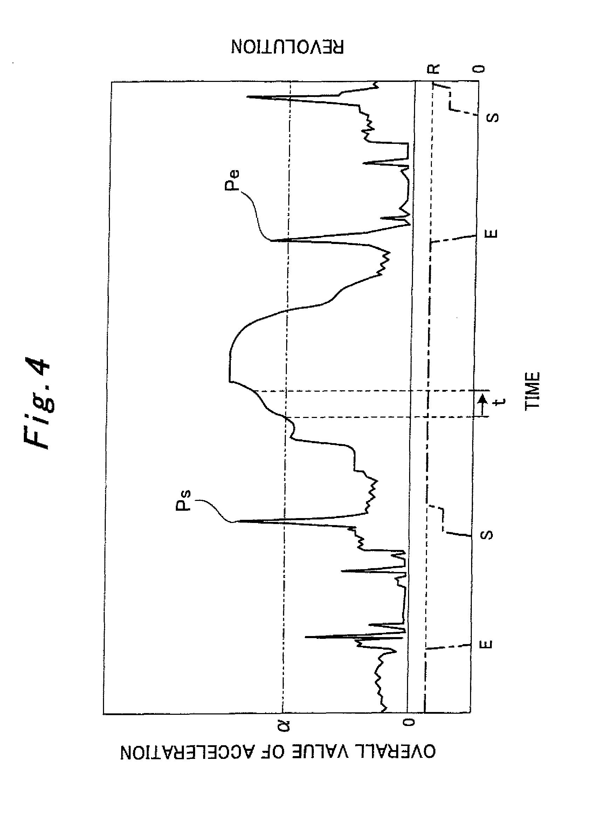

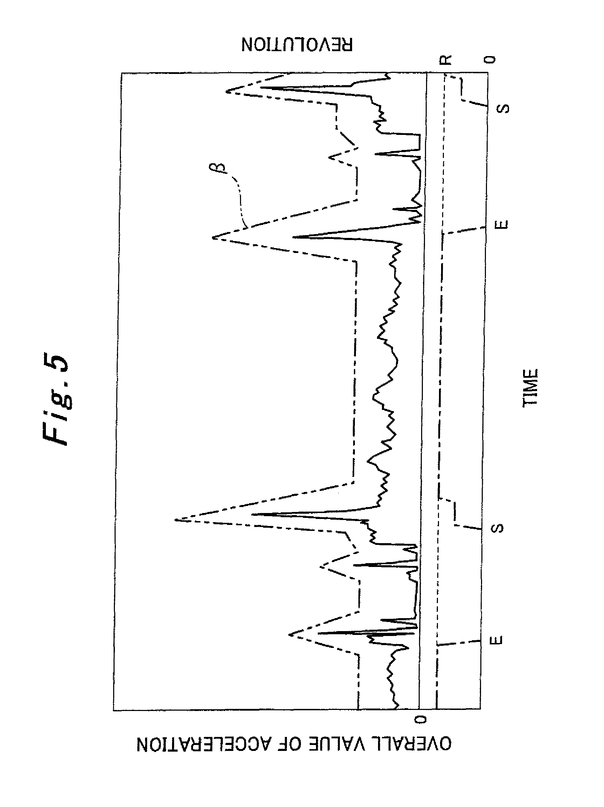

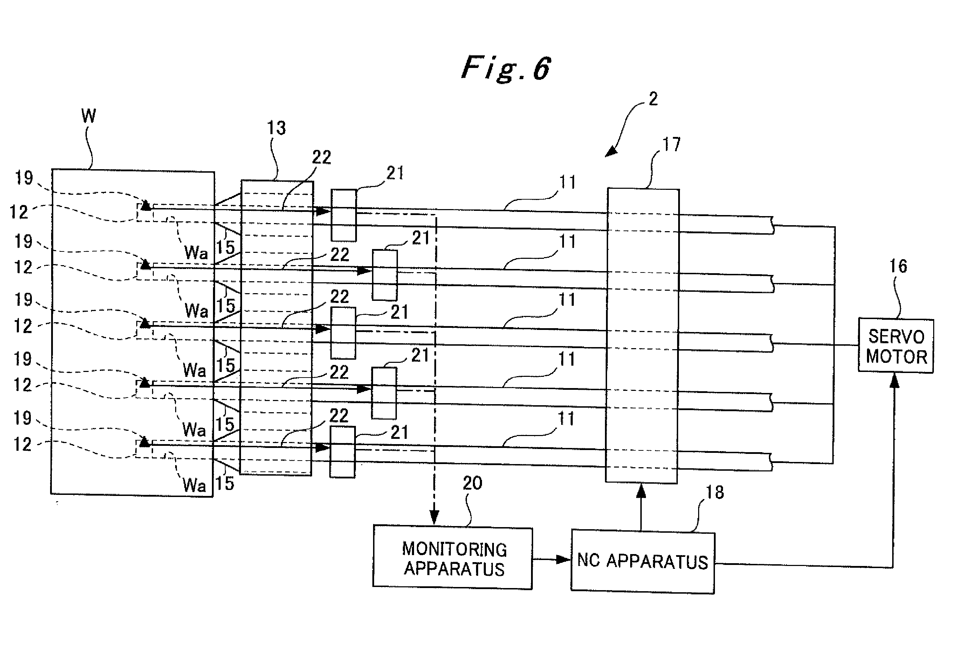

Detail descriptions of a deep-hole drilling apparatus according to the present invention will be described below with reference to the drawings. Fig. 1 is a schematic diagram of a deep-hole drilling apparatus according to an embodiment of the present invention. Fig. 2 is a chart showing results of the frequency analysis for acceleration. Fig. 3 is a chart showing results of the frequency analysis for acceleration when a tool mark is produced. Fig. 4 is a chart showing temporal variation in the overall value. Fig. 5 is a chart showing another method of setting up the threshold. Fig. 6 is a schematic diagram of a deep-hole drilling apparatus according to another embodiment of the present invention.

Fig. 1 shows a 5-axis BTA (Boring and Trepanning Association) machine 1, which is a deep-hole drilling apparatus to drill a deep hole in a work (object to be processed) W. The 5-axis BTA machine 1 includes five boring bars 11, each of which has a hollow structure. Each boring bar 11 is provided with a tool 12 at the tip end thereof. The boring bars 11 penetrate a support member 13, and are supported thereby. Tubular pressure heads 15 penetrate the support member 13, and unillustrated plain bearings are disposed inside the respective pressure heads 15. As a consequence, the boring bars thus supported are rotatable and movable in the axial direction.

In addition, the 5-axis BTA machine 1 includes a servo motor 16, which drives to rotate the boring bars 11, and a ball screw mechanism 17, which moves the boring bars 11 in the axial direction. An NC (Numerical Control) apparatus 18 is connected to both the servo motor 16 and the ball screw mechanism 17. An acceleration meter (vibration detection means) 19 is disposed on a slope face formed at the tip end of each pressure head 15. The acceleration meters 19 are connected to the NC apparatus 18 with a monitoring apparatus (tool-mark determination means) 20 being set in between.

Drilling deep holes in the work W starts with the placing of the 5-axis BTA machine 1 at a position where the tip ends of the pressure heads 15 can be pressed onto their respective predetermined positions on the work W. Then, the servo motor 16 and the ball screw mechanism 17 are driven. A predetermined revolution and a predetermined feed speed are given to the tools 12 by means of their respective boring bars 11. Thus formed in the work W are deep holes Wa each of which has a desired hole depth and a desired hole diameter. While the deep holes Wa are being drilled, cutting oil is supplied from an unillustrated oil supply apparatus to the tip ends of the tools 12. The cutting oil and the chips that have been grazed away by the tools 12 pass through the hollow portions of the boring bars 11, and are discharged out of the inside of the tools 12.

As the drilling of the deep holes Wa progresses and the feed amount becomes larger, the boring bar 11 protrudes from the pressure head 15 by a large amount. In the meanwhile, the bending natural frequency varies. The conditions under which whirling vibration is more likely to be produced are satisfied when the varying bending natural frequency becomes the same value of the component that is x times more than the revolution. When such conditions are satisfied, a tool mark, which is a spiral scratch, may possibly be formed in the inner circumferential surface of the deep hole Wa.

Whether a tool mark is formed during the drilling of a deep hole in the work W is preferably determined during the same drilling process. Descriptions will be given below of a method by which the monitoring apparatus 20 performs such determination.

Firstly, the vibration produced in each boring bar 11 is transmitted by way of the corresponding pressure head 11, and is then detected, as acceleration, by the acceleration meter 19. The acceleration signal thus detected is sent to the monitoring apparatus 20. The monitoring apparatus 20 analyzes frequency of the acceleration signal by means of Fourier transformation. The monitoring apparatus then outputs the results of the acceleration frequency analysis for each of the boring bars 11 as shown in Fig. 2.

While the drilling is progressing, cutting resistance is applied on the boring bars 11 (tools 12). As a consequence, torsional vibration is constantly produced on the boring bars 11. Abrupt, quantitatively distinctive changes in acceleration are observed in Fig. 2 at frequency ranges around a frequency f and around frequency 2f. It is a well-known fact that the components observed around these frequencies are vibration components that derive from torsional vibration. Typically, the torsional natural frequency has only a single peak. However, for example, as Fig. 2 shows, a peak for the component modulated by the revolution (torsional natural frequency ± revolution) may be observed. In addition, a peak may be observed at a frequency that is twice more than the torsional natural frequency, which derives from a distorted waveform. Note that, hereinafter, the torsional natural frequencies at a range around the frequency f and at a range around the frequency 2f will be expressed respectively as T-component and 2T-component.

Subsequently, as the feed amount of the boring bars 11 increases, the amount by which the boring bars 11 protrude from the pressure head 15 also increases. Gradually, the whirling vibration and bending vibration are produced on the boring bars 11, and thus induced a state where tool marks are likely to be produced in the deep holes Wa.

As Fig. 3 shows, with a tool mark being produced, the whirling-vibration component becomes large in a frequency range under T-component. In addition, since the whirling-vibration component is modulated by a vibration component that derives from the torsional natural frequency, the vibration component within a frequency range between T-component and 2T-component also becomes large. Note that common acceleration meters detect more sensitively the vibrations in a higher frequency range. The peak in the frequency range between T-component and 2T component tends to become greater than the peak in a frequency range under T-component.

As has been described thus far, a large change in acceleration occurs in a frequency range between T-component and 2T-component when a tool mark is produced. Accordingly, an overall value (average value) of acceleration (whirling natural frequency and bending natural frequency) within this frequency range is obtained for every predetermined period of time. The temporal changes in the overall value are outputted for each of the boring bars 11, and the temporal changes are represented by the solid line in Fig. 4. In Fig. 4, the dashed-dotted chain line represents the revolution of the servo motor 16. S indicates the time when the drilling starts. E indicates the time when the drilling is finished.

In addition, as Fig. 4 shows, the monitoring apparatus 20 has a threshold α (represented by the two-dot chain line) that has been set in advance for the overall value. The monitoring apparatus 20 determines whether the calculated overall value exceeds the threshold α or not. An overall value not exceeding the threshold α allows the drilling of the deep holes to continue. Conversely, when an overall value exceeds the threshold α, a determination is made as to whether a tool mark is produced in any one of the deep holes Wa corresponding respectively to the boring bars 11. Then, an alarm signal is sent from the monitoring apparatus 20 to the NC apparatus 18.

Subsequently, the NC apparatus 18 to which the alarm signal is inputted sends a stop signal to the servo motor 16 and the ball screw mechanism 17. Accordingly, all the balling bars 11 (tools 12) stop rotating and being fed successively. When the driving of the boring bars 11 is stopped, the tool 12 corresponding to the deep hole Wa where the tool mark is produced is replaced with a new one by an operator. Then, the drilling of the deep holes is carried out anew with the same revolution and the same feeding speed.

For this reason, according to the deep-hole drilling apparatus of the present invention, soon after it is determined that a tool mark is produced, the conditions are immediately changed to the ones that is unlikely to produce a tool mark. As a consequence, the growth of the tool mark can be prevented.

In addition, frequency analysis is carried out on the vibration produced on each boring bar 11. Comparing the frequency analysis with the analysis using waveform time history of the vibration, the frequency analysis allows easier distinction of T-component and 2T-component of torsional natural frequency from the vibration component that derives from the whirling natural frequency. While the torsional natural frequency is constantly produced during the drilling process, the whirling natural frequency is produced only at the time when a tool mark is produced. In addition, the overall value obtained for the frequency range between T-component and 2T-component makes it possible to avoid the influence that would otherwise be exerted by T-component and 2T-component, irrespective of whether a tool mark is formed or not. As a result, the determination whether a tool mark is produced or not becomes easier.

In addition, according to the deep-hole drilling apparatus of the present invention, the determination whether a tool mark is produced or not is also possible with the configurations described below.

In an alternative configuration, wavelet transformation replaces Fourier transformation used in the frequency analysis carried out by the monitoring apparatus 20. Accordingly both the information on time and the information on frequency can be analyzed concurrently, so that the determination for tool marks can be performed easily.

In another configuration, suppose a case where information on the frequency that is produced as the whirling natural frequency has been available beforehand. In this case, the determination on whether a tool mark is produced or not is carried out not by setting the entire frequency range between T-component and 2T-component as the target frequency for the tool-mark determination but by targeting only the frequencies around the above-mentioned previously-known frequency. Thus the detection of the most responsible whirling vibration for the production of the tool mark can be achieved more precisely.

In another configuration, the determination that a tool mark is produced is made on condition that the overall value continuously exceeds the threshold α, or, more specifically, that, as shown in Fig. 4, *t* seconds have been passed since the overall value starts to exceed the threshold α. Thus determination errors are avoidable even with an instantaneous acceleration increase. Some examples that cause such an increase are: disturbances such as noise during the drilling; an abruptly-increased overall value Ps caused by the positioning of the tools 12 to the work W at the start of the drilling process S; and an abruptly-increased overall value Pe caused by the detachment of the tools 12 from the work W at the end of the drilling process E.

During the period of low revolution at the start of the drilling process S, the collision caused by the positioning of the tools 23 to the work W causes an increase in acceleration all over the frequencies as described above. Accordingly, as Fig. 4 shows, the overall value Ps that has been abruptly increased exceeds the threshold α. The abruptly-increased overall value Ps may possibly result in an erroneous determination even when a tool mark is not produced. Accordingly, in another configuration, rated revolution R of the servo motor is added to the overall value exceeding the threshold α as the condition for the determination that a tool mark is produced. Determination errors can be avoided in this way.

Note that at the time of the collision between the work W and the tools 12, the motor current is increased accompanied by the increase of the rotational torque of the servo motor 16. Accordingly, in another configuration, the rated current value of the servo motor 16 may be added to the overall value exceeding the threshold α as the conditions for the determination that a tool mark is produced. In addition, at the collision between the work W and the tools 12, a larger thrust load is applied, via the tools 12, to the boring bars 11, which is larger than that applied thereto during the drilling process. Accordingly, the rated thrust load applied to the boring bars 11 may be added to the overall value exceeding the threshold α as the conditions for the determination that a tool mark is produced.

In another configuration, the frequency range for which the overall value is calculated from the frequency analysis data at the time when a tool mark is produced is once stored, and the stored frequency range is automatically set when the frequency analysis data is identical to the previous one. While a change in the frequency range for which the overall value is calculated may take place in response to the drilling conditions, such as the material for the work and the shape of the tools, the use of the above-described configuration makes it possible to respond promptly even to such a change.

In still another configuration, as Fig. 5 shows, the maximum value of the overall value for each predetermined period of time since the start of the drilling process is calculated from the acceleration level of a case where the drilling process is completed with no tool marks being produced. The maximum values thus obtained are multiplied by a safety factor (for example, 1.5) to obtain the threshold β (represented by the two-dot chain line in Fig. 5) , and the threshold β thus obtained is stored. When an acceleration level that is equal to the previous one is detected, the stored threshold is automatically set. With this configuration, since the threshold for each period of time is obtained, more precise determination is possible. In addition, automatic response is possible even to the changes in the acceleration level caused by the changes in the drilling conditions, such as the material for the work and the shape of the tools.

In another configuration, the NC apparatus 18 to which the alarm signal is inputted slows down the revolution of the servo motor 16. With this configuration, the whirling natural frequency can be made to differ from the bending natural frequency. Accordingly, the vibration of the boring bars 11 can be reduced, and the growth of the tool mark is prevented.

In another configuration, the NC apparatus 18 to which the alarm signal is inputted slows down the feeding speed of the ball screw mechanism 17. Accordingly, the self-excited vibration of the boring bars 11 is eliminated, which would otherwise be caused by the tool mark. As a consequence, the growth of the tool mark is prevented.

In another configuration, the NC apparatus 18 to which the alarm signal is inputted makes an unillustrated electromagnetic vibrator or the like to give the boring bars 11 a high-frequency vibration in the axial direction of the boring bars 11. With this configuration, the contact time of the tools 12 with the respective deep holes Wa is made shorter. As a consequence, the cutting resistance can be reduced, and thus the torsional vibration can also be reduced.

In another configuration, as in a 5-axis BTA machine 2 shown in Fig. 6, the acceleration meters 19 may be disposed in the respective tools 12. In this case, each of the acceleration meters 19 is connected, through a cable 22, to a telemeter 21 provided to the corresponding boring bar 11. The telemeters 21 transmit the acceleration signals by wireless. Accordingly, more precise detection of the vibration is possible. Alternatively, a slip ring may be disposed in place of the telemeter 21, so as to reduce the noise.

In another configuration, a strain gauge may be disposed in place of the acceleration meter 19 for the purpose of detecting the vibration of each of the boring bars 11. Accordingly, the determination of whether a tool mark is produced can be carried out on the basis of the stress level. Alternatively, a displacement sensor may be disposed in place of the acceleration meter 19. Accordingly, the determination of whether a tool mark is produced can be carried out for a frequency range that is lower than the frequency range between T-component of the torsional natural frequency and 2T-component thereof.

In another configuration, an encoder to detect the revolution of each of the boring bars 11, an electromagnetic pick-up using gears, and the like may be disposed in place of the acceleration meter 19. Accordingly, the determination of whether a tool mark is produced can be carried out on the basis of the changes in the revolution of the boring bars 11. Alternatively, a mike to measure the cutting sound may be disposed in place of the acceleration meter 19. Accordingly, the determination of whether a tool mark is produced can be carried out on the basis of the changes in the cutting sound.

### Field of the Industrial Application

The present invention is applicable to a case where a deep hole is drilled using an NC machining center.

## Claims

1. A deep-hole drilling apparatus **characterized by** comprising:
a tool that is rotationally driven to drill a deep hole in an object to be processed;
vibration detection means that detects vibration of the tool during deep hole processing;
tool-mark determination means which performs frequency analysis on the vibration detected by the vibration detection means, the tool-mark determination means determining that a tool mark is produced in the deep hole when an overall value of frequencies exceeds a predetermined threshold, the overall value of the frequencies being within a frequency range not including a torsional natural frequency on torsional vibration constantly produced during the deep hole processing; and
controlling means that controls both revolution and feeding speed of the tool on the basis of the determination made by the tool-mark determination means.

2. The deep-hole drilling apparatus according to claim 1
**characterized in that**
the tool-mark determination means determines that a tool mark is produced in the deep hole only in a case where the overall value continuously exceeds the threshold for a predetermined period of time.

3. The deep-hole drilling apparatus according to any one of claims 1 and 2
**characterized in that**
the tool-mark determination means starts to make the determination when the revolution of the tool reaches a rated revolution.

4. The deep-hole drilling apparatus according to any one of claims 1 and 2
**characterized in that**
the tool-mark determination means starts to make the determination when a current flowing through a motor that rotationally drives the tool reaches a rated current.

5. The deep-hole drilling apparatus according to any one of claims 1 and 2
**characterized in that**
the tool-mark determination means starts to make the determination when a thrust load produced by the contact between the tool and the object to be processed reaches a rated thrust load.

6. The deep-hole drilling apparatus according to any one of claims 1 to 5
**characterized in that**
when the tool-mark determination means determines that a tool mark is produced in the deep hole, a frequency range for which the overall value is calculated at this time is stored.

7. The deep-hole drilling apparatus according to claim 1
**characterized in that,**
in a case where the drilling of the deep hole is completed with no overall values exceeding the threshold, a new threshold is calculated by multiplying the overall values by a desired safety factor, and the new threshold is used for the next determination that is carried out under the same drilling conditions.
